Europäisches Patentamt

European Patent Office

Office européen des brevets

(11) Publication number: **0 153 011**
**A1**

(12) **EUROPEAN PATENT APPLICATION**

(21) Application number: **85300349.9**

(22) Date of filing: **18.01.85**

(51) Int. Cl.⁴: **A 61 C 15/02**

(30) Priority: **20.01.84 GB 8401593**

(43) Date of publication of application: **28.08.85**
Bulletin **85/35**

(84) Designated Contracting States: **AT BE CH DE FR GB IT LI LU NL SE**

(71) Applicant: **P A Consulting Services Limited, Hyde Park House 60a Knightsbridge, London SW1 (GB)**

(72) Inventor: **Bailey, Richard, 1 Silver Street Litlington, Nr. Royston Hertfordshire SG8 OQE (GB)**
Inventor: **Marriage, John, Orchard House 2 High Street, Bourn Cambridgeshire CB3 7SQ (GB)**
Inventor: **Skingsley, John David, 6 Redhooods Way East, Letchworth Hertfordshire SG6 4DF (GB)**

(74) Representative: **Morton, Colin David et al, Keith W Nash & Co. Pearl Assurance House 90-92 Regent Street, Cambridge CB2 1DP (GB)**

(54) **Improved toothstick and methods of production.**

(57) A toothstick (18) for insertion between teeth to remove food particles comprises a wire substrate (14) covered by an outer coating of a synthetic plastics material which is resiliently deformable on compression so that the toothstick cleans the inner sides of spaces between teeth. Three methods are disclosed for covering the wire substrates with the elastomeric synthetic plastics material: the twisted wire pairs are bonded by heat and pressure between two thermoplastic sheets such as Evazote foam; the substrates are dipped in a liquid PVC plastisol; or the wire substrates are positioned in a mould and synthetic plastics material is moulded around them. In the first and third method, the individual toothsticks are formed by cutting the foam between the substrates so that each toothstick comprises a twisted metal pair surrounded by the synthetic plastics material.

C544/P

Title:  Improved Toothstick and Methods of Production

Field of the Invention

This invention relates to toothsticks (or toothpicks) which are devices for insertion between teeth to remove food particles and to clean the teeth.

Background to the Invention

An ordinary rigid toothpick of wood or plastics material can be used to remove food particles from accessible regions of the mouth such as the outer sides of spaces between teeth.  However, such toothpicks cannot satisfactorily clean the inner sides of spaces between teeth, and the invention stems from the realisation that such spaces could be reached by a toothstick having a resilient outer covering which is compressed as the toothstick is inserted into the narrow space between the teeth and which then expands to clean the inner side of the space.

Summary of the Invention

According to one aspect of the invention there is provided a method of making toothsticks, comprising bonding with the aid of heat and/or pressure a plurality of relatively rigid, elongate substrates to a relatively soft, resiliently deformable, thermoplastic, elastomeric material to provide a plurality of toothsticks each having a corresponding substrate surrounded by an outer covering of the elastomeric material.  When the toothstick is inserted into a narrow space between teeth which is narrower than the undeformed width of the toothstick, the elastomeric material is compressed and then expands as the space widens on the inner side of the mouth. This enables tooth and gum surfaces on both the inner and outer sides of the mouth to be cleaned by the removal of food particles, detritus and plaque.

The substrates may be bonded to a body of said material which is cut between the substrates to provide the individual toothsticks.

Preferably, the substrates are located in spaced relationship between two sheets of said elastomeric material which is then heated and compressed to bond the elastomeric material to the substrates. The elastomeric material is preferably a synthetic plastics material, and the two sheets may be formed by slitting a thicker sheet of the synthetic plastics material into two sheets of half the original thickness. For example, a sheet 3 mm thick may be slit into two sheets each 1.5 mm thick, the substrates being placed in position on one of the sheets and the other then subsequently being placed on top and bonded to the lower sheet and the substrates by heat and pressure.

Before being bonded to the synthetic plastics material, each substrate may be coated with a thermoplastic bonding primer to increase the strength of bond between the substrates and the synthetic plastics material. Preferably, the synthetic plastics material is a closed cell ethylene vinyl acetate foam which has been found to be extremely effective in that it is sufficiently abrasive to loosen plaque and leave the teeth feeling clean. The foam material may be impregnated with flavourings or
fluorides.

According to another aspect of the invention a method of
making toothsticks comprises applying a material in liquid
or paste form to the outer surfaces of a plurality of
elongate substrates, and causing or allowing the material
to solidify to form an outer covering of a relatively
soft, resiliently deformable, elastomeric material on the
substrates, to provide a plurality of toothsticks each
having a corresponding substrate surrounded by an outer
covering of the elastomeric material.

Preferably, the substrates are dipped into said material
in liquid or paste form, and withdrawn therefrom to
provide on each substrate a coating of said material which
is cured to give the resiliently deformable outer
covering.  The substrates may be dipped into the liquid or
paste a second time, or any further number of times, for
example to increase the thickness of the coating or to
impart to the resulting toothsticks a chosen shape or
texture.  The plastics material into which the substrates
are subsequently dipped may be different from the first
liquid or paste material into which the substrates are
dipped.  The material is preferably a synthetic plastics
material which may be a liquid polymer compound known as a
PVC plastisol material.  In a preferred method the dipped
substrates are heated (e.g.  for one minute at 200°C) to
cure the coatings of synthetic plastics material.  As
before, a bonding primer may be applied to the substrates
before application of the synthetic plastics material, to
increase the strength of bond between the substrates and
the synthetic plastics material.

- 4 -

According to another aspect of the invention a method of making toothsticks, comprises moulding a material around a plurality of elongate substrates, causing or allowing the material to cure around the substrates to provide a plurality of toothsticks each having a corresponding relatively rigid substrate surrounded by an outer covering of the material which is relatively soft and resiliently deformable. Preferably, said material is moulded around a plurality of substrates and, after curing, the composite body thereby formed is cut between the substrates to provide the individual toothsticks and cutting the cured synthetic plastics material between the substrates to provide a plurality of toothsticks each having a corresponding relatively rigid substrate surrounded by an outer covering of the material which is relatively soft and resiliently deformable. The material is preferably a synthetic plastics material, and for this method of moulding in situ, the synthetic plastics material is preferably a polyurethane foam, such as that known as Hypol foam. One of the main advantages of such foams for the present application is that food flavour additives, such as mint, can be readily incorporated, as can fluorides or aqueous colouring.

The invention also includes within its scope one or more toothsticks made according to the methods of the aspects of the invention previously described. Hence, the invention also includes a toothstick comprising a relatively rigid, elongate substrate covered with a relatively soft, resiliently deformable, elastomeric material applied to the substrate by: bonding with the aid of heat and/or pressure; dipping of the substrate into the material in liquid or paste form; or by moulding of the material around the substrate.

The principal requirement of the substrate is that it must be extremely stiff in compression and resist buckling forces. The toothstick is subjected to considerable force when inserted between the teeth and the higher the modulus of the substrate, the smaller its cross-sectional area can be. The smaller the cross-sectional area, the smaller the size of space between teeth which can be cleaned. Many synthetic plastics materials are not stiff enough to form the substrate although high modulus carbon fibre composite might be suitable. This however is rather expensive and brittle and the preferred material is a high carbon spring steel wire, such as piano wire, or a stainless steel spring wire. The leading end of the wire is preferably rounded so as to minimise the potential danger of the sharp wire end penetrating the outer covering and piercing the gums. By using rapid heating techniques, such as direct resistance heating or electric arc heating it is possible to cut the wire and either produce a rounded end or a tip head larger than the wire diameter.

An alternative way of avoiding the potential danger of a sharp wire end is to bend a length of metal wire upon itself and twist the two lengths together to provide a twisted pair, the folded end of the wire being at the front or leading end of the toothstick. The twists in the wire aid adhesion of the outer synthetic plastics covering. It has been shown that wire diameters within the range 0.125 to 0.4 mm are suitable. In particular, a wire of 0.2 mm bent and twisted to form a twisted pair should give a satisfactory balance between stiffness and access to small spaces. A similar degree of stiffness could be obtained with a single wire 0.275 mm in diameter.

The invention will now be further described, by way of example, with reference to the accompanying drawings, in which:-

Figure 1 illustrates one method of making toothsticks in small sample numbers,

Figure 2 shows at (a), (b) and (c) three alternative shapes for the toothstick, and at (d) shows how material may be cut to form generally triangular shaped toothsticks like that of Figure 2c,

Figure 3 shows a possible way of making toothsticks on a production scale, and

Figure 4 illustrates part of an alternative method of making toothsticks.

In all the embodiments described each of the toothsticks has a substrate of metal wire (e.g. piano wire) surrounded by an outer covering of a resilient synthetic plastics material. In each case the wire is 0.2 mm in diameter and is cleaned, etched and primed with a primer bonder to aid adhesion of the outer covering.

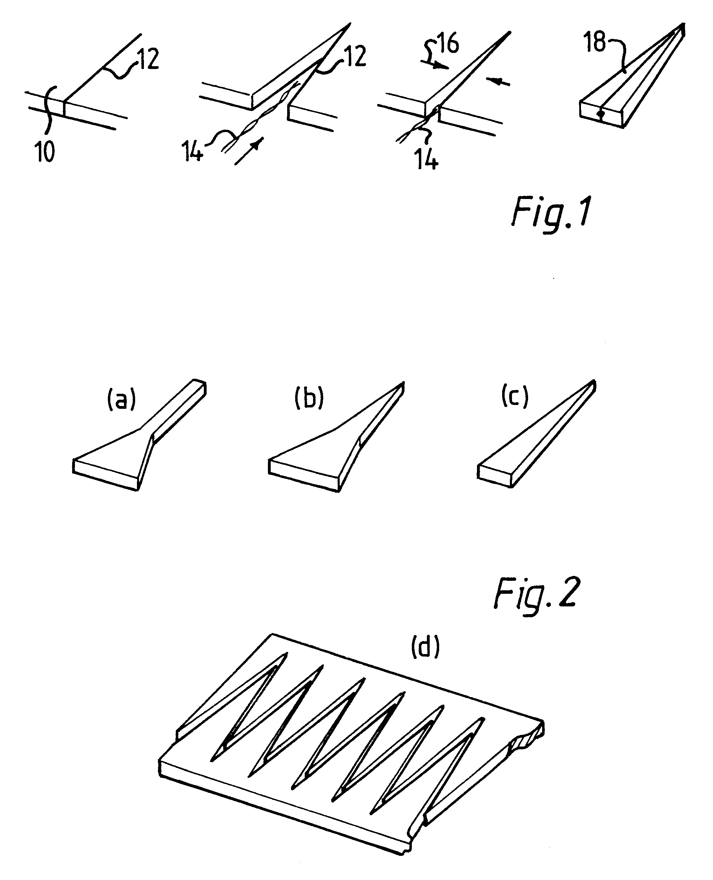

In the first method illustrated in Figures 1 and 2 the cleaned and etched metal wire substrate is primed with E.V.A. hot melt adhesive. The substrate is then covered with a cross-linked, closed cell ethylene vinyl acetate foam known as Evazote foam which is thermoplastic. The foam is in a layer 10, 3 mm thick and is slit at 12 for the insertion of the twisted wire pair 14. The slit 12 is then closed and the edges of the foam bonded around the twisted wire pair 14 by means of heat and pressure indicated at 16. After cooling a triangular shaped toothstick 18 is cut from the foam. The final thickness of the toothstick 18 can be varied by modifying the amount of compression applied during the pressure bonding part of the process. This also changes the material density by compacting the cellular structure. The thickness of the toothstick would normally be 1 to 2.5 mm from an original sheet thickness of 3 mm. This behaviour of the material makes it possible to produce a toothstick of tapered section. Heat can be applied by using hot air, radiant heating or hot plates. Radiant heating is recommended and a suitable temperature has been found to be 160$^{\circ}$C.

The material should be cut to shape after the wire pair has been bonded in position because the small triangular pieces will tend to shrink and distort during heating. It has been found that the size of the tip should not be too large (typically less than 2 mm). The actual shape of the toothstick can be varied according to production or market preferences. Three examples of possible shapes of toothstick are illustrated at (a), (b) and (c) in Figure 2. The foam sheets may be cut in the pattern illustrated in Figure 2(d), to provide triangular shaped toothsticks as at Figure 2(c), to minimise wastage.

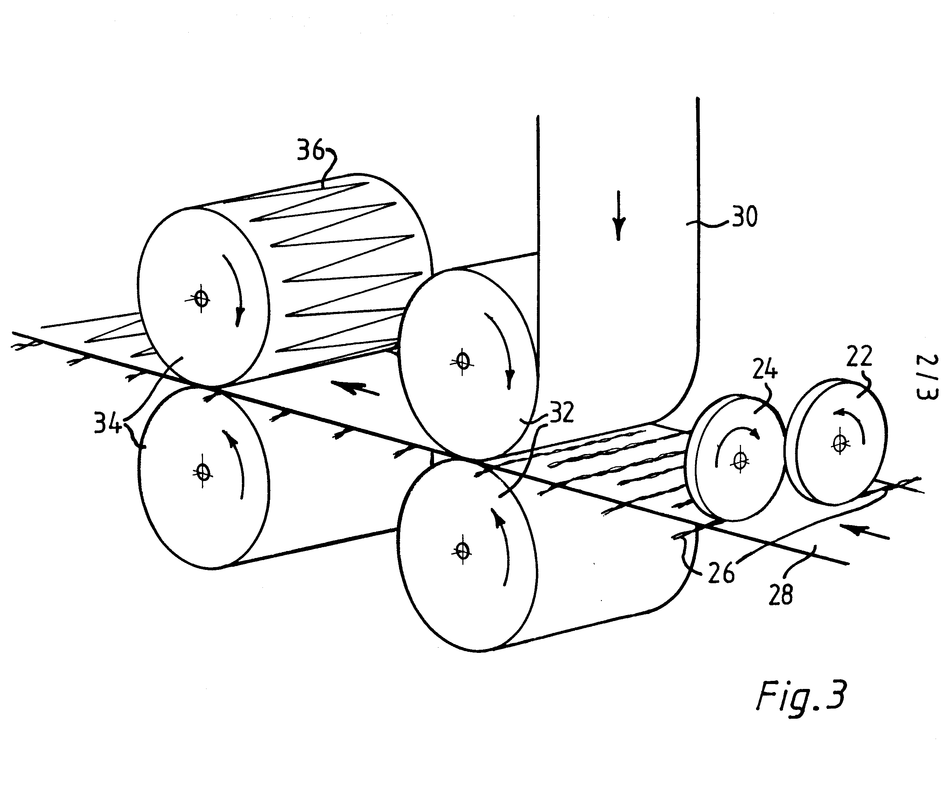

Figure 3 illustrates a possible apparatus for making toothsticks like that of Figure 2(c) at high production rates. Two rollers 22, 24 feed in twisted and primed wire pairs 26 from respective sides of a lower Evazote foam sheet 28. A further Evazote foam sheet 30 is bonded on top of the lower sheet 28 (and the wires 26 laid thereon) by means of rotating rollers 32, heat and pressure being applied to the foam sheets 28 and 30 in the region of the nip of the rollers. The heat and pressure bond the sheets 28 and 30 to one another and to the twisted wire pairs 26. A pair of cutting rollers 34 having cutting knives 36 thereon cut the foam to form triangular toothsticks.

In this method the wires 26 are accurately positioned with respect to the knives 36 so that cutting does not expose the wires. Alternatively, or in addition, a separate detection system (e.g. optical or magnetic) may be used to achieve accurate registration of the wires. A controlled cutting system such as a water jet or laser may then be used instead of cutting knives.

In Figure 3, the twisted wire pairs 26 extend laterally with respect to the direction of movements of the sheets 28, 30. As an alternative, the twisted wire pairs 26 may be positioned so as to extend longitudinally, ie parallel to the direction of movement of the sheets 28, 30.

A second way of coating the wire substrates with the synthetic plastics material is to dip the wires into a synthetic plastics material in liquid or paste form. A suitable material is a liquid polymer compound such as a PVC plastisol. The wire is first cleaned, etched, primed, (with an air drying primer such as Alco 862) and cut to length before being dipped in the plastisol. The wires are then withdrawn and heated in a hot air oven at about 200°C to cure the plastisol into a foamed outer covering. The viscosity of the plastisol and the withdrawal speed of the wire must be carefully controlled to obtain a consistent even coating. The wire tip can be covered by a second dipping process, for the tip only, partway through the curing cycle.

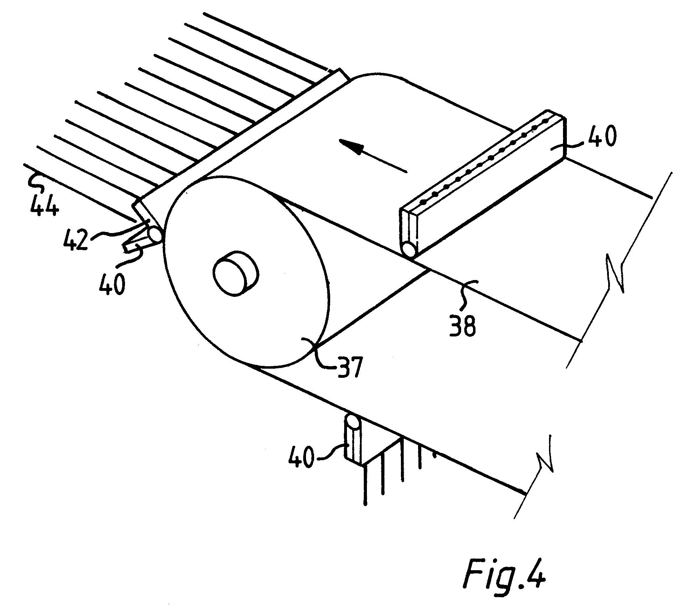

Figure 4 illustrates part of a machine which could be used to make toothsticks by this method at high production rates. A rotating roller 37 feeds a belt 38 carrying at spaced intervals thereon gripper bars 40 which open as at 42 to hold a plurality of prepared wires 44. The wires are then dipped in the PVC plastisol, withdrawn and heated at about 200°C for one minute to cure the plastisol so that it forms a foam completely surrounding the wire substrates. The plastisol is applied in a thin coating so that the final toothstick is about 2 to 3 mm in diameter.

A third way of applying a synthetic plastics coating to the wire substrate is to mould a foam around the substrates whilst the latter are held in position in the mould. The foam is produced by mixing the components, such as water and a polyurethane foam precursor, and introducing the mixture into a cavity or mould containing the substrates. The foaming action produces gas which expands the mixture to fill the mould or cavity. A suitable foam material is that known as a Hypol foam which is a polyurethane foam having a very low toxicity. The wire is cleaned, etched and primed (with an air drying primer like Thixon 405) before being twisted and then placed in position ready for moulding of the foam material. The foam material is preferably moulded into sheets around a number of wire substrates held in position, the individual toothsticks being cut from the cured foam. This can produce toothsticks approximately 1 mm thick.

In a continuous production process, the foam is preferably cast on a moving belt with the wire substrates held in position.

One of the principal advantages of Hypol foam is that it
readily accepts food flavours and colouring material.

- 11 -

CLAIMS

1. A method of making toothsticks, comprising bonding with the aid of heat and/or pressure a plurality of relatively rigid, elongate substrates to a relatively soft, resiliently deformable, thermoplastic, elastomeric material to provide a plurality of toothsticks each having a corresponding substrate surrounded by an outer covering of the elastomeric material.

2. A method according to claim 1, wherein the substrates are bonded to a body of said material which is cut between the substrates to provide the individual toothsticks.

3. A method according to claim 2 wherein the substrates are located in spaced relationship between two sheets of said elastomeric material which is then heated and compressed to bond the elastomeric material to the substrates.

4. A method according to any of the preceding claims, wherein each substrate is coated with a thermoplastic bonding primer, before being bonded to the elastomeric material, to increase the strength of bond between the substrates and the elastomeric material.

5. A method according to claim 4, wherein the substrates are metal wire which is cleaned and etched prior to application of a hot melt adhesive forming the bonding primer.

6. A method according to any of the preceding claims, wherein said elastomeric material is a synthetic plastics foam material.

7. A method according to claim 5, wherein the synthetic plastics foam material is an ethylene or ethylene copolymer foam.

8. A method according to claim 7 wherein the synthetic plastics foam material is a ethylene vinyl acetate foam.

9. A method of making toothsticks, comprising applying a material in liquid or paste form to the outer surface of a plurality of elongate substrates, and causing or allowing the material to solidify to form an outer coating of a relatively soft, resiliently deformable, elastomeric material on the relatively rigid substrates to produce a plurality of toothsticks each having a corresponding substrate surrounded by an outer covering of the elastomeric material.

10. A method according to claim 9, wherein the substrates are dipped into said material in liquid or paste form, and withdrawn therefrom to provide on each substrate a coating of said material which is cured to give the resiliently deformable outer covering.

11. A method according to claim 9 or 10, wherein said material is a synthetic plastics material.

12. A method according to claim 11, wherein the dipped substrates are heated to cure the coatings of synthetic plastics material.

13. A method according to claim 12, wherein the synthetic plastics material is a liquid polymer compound known as a PVC plastisol material.

14. A method according to claim 13 wherein the PVC plastisol material produces a foamed structure.

15. A method according to any of claims 9 to 14 wherein each substrate is coated with a bonding primer before application of the material, to increase the strength of bond between the substrates and the material.

16. A method of making toothsticks, comprising moulding a material around a plurality of elongate substrates and causing or allowing the material to cure around the substrates.

17. A method according to claim 16, wherein said material is moulded around a plurality of substrates and after curing, the composite body thereby formed is cut between the substrates to provide the individual toothsticks and cutting the cured synthetic plastics material between the substrates to provide a plurality of toothsticks each having a corresponding relatively rigid substrate surrounded by an outer covering of the material which is relatively soft and resiliently deformable.

18. A method according to claims 16 and 17, wherein said material is a synthetic plastics material.

19. A method according to claim 18, wherein the synthetics plastics material is a polyurethane foam, such as that known as Hypol foam.

20. A toothstick comprising a relatively rigid, elongate substrate covered with a relatively soft, resiliently deformable, elastomeric material applied to thesubstrate by: bonding with the aid of heat and pressure; by dipping
of the substrate into the material in liquid or paste
form; or by moulding of the material around the
substrate.

Fig.1

Fig.2

Fig.3

0153011

Fig.4

European Patent Office

**EUROPEAN SEARCH REPORT**

0153011
Application number

EP 85 30 0349

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 590 814 (BENNETT et al.) <br> * Column 1, line 67 - column 2, line 59; column 5, lines 53-69; column 8, lines 1-24 * | 1,20 | A 61 C 15/02 |
| A | | 2,3,6-8 | |
| X | US-A-1 746 591 (HEYMANN ET AL:) <br> * Page 1, lines 51-71; figures 1-4 * | 9,20 | |
| A | | 1 | |
| A | DE-A-2 748 343 (OKIDO) <br> * Page 5, line 4 - page 7, line 2 * | 1,5,20 | |
| A | CH-A- 211 202 (MAUMARY) <br> * Page 1, left column, lines 14-24 * | 1 | A 61 C 15/00 |
| A | US-A-4 149 815 (KAWAM) <br><br> * Column 2, lines 38-48 * | 6-8,13,14,19 | |
| A | US-A-4 326 547 (VERPLANK) <br> * Column 2, line 65 - column 3, line 6 * | 16,20 | |

--- -/-

The present search report has been drawn up for all claims

| Place of search | Date of completion of the search | Examiner |
|---|---|---|
| BERLIN | 19-04-1985 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0153011
Application number

European Patent
Office

EUROPEAN SEARCH REPORT

EP 85 30 0349

Page 2

## DOCUMENTS CONSIDERED TO BE RELEVANT

| Category | Citation of document with indication where appropriate, of relevant passages | Relevant to claim | CLASSIFICATION OF THE APPLICATION (Int. Cl.4) |
|---|---|---|---|
| A | DE-U-7 040 337 (HABENICHT) | | |
| | --- | | |
| A | US-A-2 821 202 (DAVIS) | | |
| | ----- | | |

TECHNICAL FIELDS SEARCHED (Int. Cl.4)

The present search report has been drawn up for all claims

| Place of search | Date of completion of the search | Examiner |
|---|---|---|
| BERLIN | 19-04-1985 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82